# EUROPÄISCHE PATENTSCHRIFT

(11) **EP 3 439 913 B1**
(45) Veröffentlichungstag und Bekanntmachung des Hinweises auf die Patenterteilung: **28.08.2019**
(21) Anmeldenummer: 17723269.1
(22) Anmeldetag: 31.03.2017
(51) Int. Cl.: B60N 3/10

(54) **AUFBEWAHRUNGSSYSTEM**
STORAGE SYSTEM
SYSTÈME DE CONSERVATION

(30) Priorität: 04.04.2016 DE 102016106060
(43) Veröffentlichungstag der Anmeldung: 13.02.2019
(73) Patentinhaber: Dr. Schneider Kunststoffwerke GmbH, 96317 Kronach (DE)
(72) Erfinder: UHLENBUSCH, Olaf, 96275 Marktzeuln (DE); RAITHEL, Arno, 95239 Zell (DE)
(86) Internationale Anmeldenummer: PCT/EP2017/057700
(87) Internationale Veröffentlichungsnummer: WO 2017/174459

(56) Entgegenhaltungen:
- DE-U1- 20 216 674
- US-A1- 2005 051 584

## Beschreibung

Es wird ein Aufbewahrungssystem für verschiedene Gegenstände beschrieben, wobei das Aufbewahrungssystem mindestens eine erste Aufnahme, in der ein erster Aufbewahrungsbehälter aufgenommen ist, wobei der erste Aufbewahrungsbehälter über eine Verlagerungseinrichtung aus der ersten Aufnahme herausausfahrbar ist, und zwei zweite Aufnahmen aufweist, in welchen jeweils zweite Aufbewahrungsbehälter aufgenommen ist. Das Aufbewahrungssystem kann insbesondere für Fahrzeuge verwendet werden. Fahrzeuge umfassen nicht abschließend Kraftfahrzeuge wie PKWs, Lkw's, Busse und landwirtschaftliche Fahrzeuge, Züge, Flugzeuge und Schiffe. Beispielsweise kann das Ablagesystem im Bereich einer Mittelkonsole angeordnet und sowohl für einen Fahrer als auch für einen Beifahrer zugänglich sein. Gleichfalls kann das Ablagesystem auch im Fond eines Fahrzeugs angeordnet und daher Fahrgästen auf einer Rücksitzbank zugänglich sein. Das Ablagesystem kann auch in einer Türverkleidung eines Fahrzeugs angeordnet sein. Darüber hinaus kann das Aufbewahrungssystem auch im Bereich von Sitzmöbeln integriert werden.

Vor allem in Kraftfahrzeugen besteht der Bedarf verschiedene Gegenstände möglichst sicher verstauen zu können. Hierzu sind für die verschiedenen Gegenstände angepasste Aufbewahrungsmöglichkeiten erforderlich. In Kraftfahrzeugen ist jedoch der Platz zur Aufnahme für Gegenstände begrenzt. Aus diesem Grund wurden Aufbewahrungssysteme entwickelt, die in einer Verstauposition einen geringen Platzbedarf aufweisen und in eine Gebrauchsposition verbringbar sind, in welcher ein vergrößertes Platzangebot für Gegenstände geschaffen wird.

DE 202 16 674 U1 offenbart beispielsweise einen Getränkehalter, der in zwei unterschiedliche Stellungen verbracht werden kann. In einer ersten Stellung kann nur ein erstes Behältnis aufgenommen werden und in einer zweiten Stellung können zwei Behältnisse aufgenommen werden. Der Getränkehalter weist einen stabförmigen Träger auf, der mit Halteelementen für die Behältnisse verbunden ist. In der zweiten Stellung wird zumindest eines der Halteelemente um den stabförmigen Träger verschwenkt.

Ein ähnliches Haltesystem für Getränkebehälter ist in DE 100 15 197 A1 offenbart. Ein Halteelement für einen Getränkebehälter oder einen Aschenbecher kann aus einer Aufnahme herausbewegt und um einen stabförmigen Träger verdreht werden, sodass zwei Aufnahmen bereitgestellt werden.

Ein ähnliches System wird ebenfalls in DE 44 29 515 C1 offenbart. Hierbei ist ebenfalls ein stabförmiger Träger vorgesehen, an dem Haltelemente verdrehbar angeordnet sind.

Den vorstehenden genannten Schriften des Standes der Technik ist gemein, dass diese einen stabförmigen Träger aufweisen. Eine weitere Ausführung wird in DE 10 2004 017 419 A1 offenbart, wobei aus einer Aufnahme ein Haltering mittels einer Schiebeführung herausbewegt werden kann und der Haltering verschwenkbar ist.

Sowohl die in DE 10 2004 017 419 A1 offenbarte Schiebeführung als auch die stabförmigen Träger von DE 202 16 674 U1, DE 100 15 197 A1 und DE 44 29 515 C1 weisen den Nachteil auf, dass exzentrische Träger vorgesehen sind, über welche ein Verdrehen oder Verschwenken erfolgt. Die dünnen stabförmigen Träger unterliegen aufgrund der exzentrischen Lagerung einem hohen Verschleiß und sind sehr anfällig für Beschädigungen. Die stabförmigen Träger können daher leicht brechen oder verbiegen. Sind an einem Träger mehrere Halteelemente angeordnet, so können zwar mehrere Aufnahmen bereitgestellt werden, jedoch ist das Aufbewahrungssystem instabil.

Es ist daher Aufgabe ein Aufbewahrungssystem anzugeben, welches die Nachteile des Standes der Technik behebt, einfach aufgebaut ist und eine Vergrößerung des Platzangebots zur Aufbewahrung von Gegenständen in einer Gebrauchsposition bietet, wobei auch in einer Verstauposition ein ausreichendes Platzangebot für Gegenstände bereitgestellt wird und das Aufbewahrungssystem stabil ist.

Die Aufgabe wird durch ein Aufbewahrungssystem mit den in Anspruch 1 angegebenen technischen Merkmalen gelöst. Vorteilhafte Weiterbildungen sind in den Unteransprüchen im Detail angegeben.

Ein Aufbewahrungssystem, welches die vorstehend genannte Aufgabe löst, weist mindestens eine erste Aufnahme, in der ein erster Aufbewahrungsbehälter aufgenommen ist, wobei der erste Aufbewahrungsbehälter über eine Verlagerungseinrichtung aus der ersten Aufnahme herausfahrbar ist, und zwei zweite Aufnahmen auf, in welchen jeweils zweite Aufbewahrungsbehälter aufgenommen sind, wobei die zweiten Aufbewahrungsbehälter mit dem ersten Aufbewahrungsbehälter verbunden sind und die zweiten Aufbewahrungsbehälter in der herausgefahrenen Position des ersten Aufbewahrungsbehälters um dessen Längsachse drehbar sind.

Das Aufbewahrungssystem weist in der Verstauposition die Möglichkeit auf, mindestens drei Gegenstände in den jeweiligen Aufbewahrungsbehältern aufzunehmen. Nach dem Verfahren des ersten Aufbewahrungsbehälters können die zweiten Aufbewahrungsbehälter um die Längsachse des ersten Aufbewahrungsbehälters und der ersten Aufnahme verdreht werden, sodass die zweiten Aufnahmen freiliegen. Durch Verfahren des ersten Aufbewahrungsbehälters und Verdrehen der zweiten Aufbewahrungsbehälter wird also nicht nur ein zusätzliches Aufbewahrungsfach bereitgestellt sondern mindestens zwei. In weiteren Ausführungsformen können selbstverständlich weitere zweite Aufbewahrungsbehälter in weiteren zweiten Aufnahmen aufgenommen sein, wobei die weiteren zweiten Aufbewahrungsbehälter mit den zweiten Aufbewahrungsbehältern verbunden sind, sodass auch diese bei einem Verdrehen der zweiten Aufbewahrungsbehälter mit verdreht werden.

Neben der Vergrößerung des Raumangebots zur Aufnahme von Gegenständen ist das Aufbewahrungssystem stabil ausgebildet. Die aus dem Stand der Technik bekannten Getränkehalter weisen in der Regel stabförmige Träger auf. Die Halteelemente der Getränkehalter aus dem Stand der Technik werden um diese stabförmigen Träger verdreht. Bei dem hierin beschriebenen Aufbewahrungssystem werden die zweiten Aufbewahrungsbehälter jedoch um den ersten Aufbewahrungsbehälter verdreht, sodass eine größere Verkippsicherheit gewährleistet wird. Der erste Aufbewahrungsbehälter kann ebenso wie die zweiten Aufbewahrungsbehälter im Wesentlichen eine zylindrische Form aufweisen. Das Verdrehen der zweiten Aufbewahrungsbehälter um den ersten Aufbewahrungsbehälter erfolgt dadurch um einen Zylinder mit einem bestimmten Querschnitt. Der Querschnitt des ersten Aufbewahrungsbehälters ist in sämtlichen Ausführungsformen deutlich größer als der Querschnitt eines stabförmigen Trägers aus dem Stand der Technik. Insbesondere ist der erste Aufbewahrungsbehälter so dimensioniert, dass Gegenstände, wie beispielsweise Getränkedosen, Getränkeflaschen, Becher, Smartphones oder ähnliches darin aufgenommen werden können. Auch in die zweiten Aufbewahrungsbehälter könnten beispielsweise Getränkeflaschen oder Becher, Smartphones, Brillen, Müllbeutel oder andere Gegenstände eingesetzt werden. Darüber hinaus können auch in die zweiten Aufnahmen Gegenstände aufgenommen werden. Die Größe und Form der Gegenstände, welche in den Aufnahmen und den Aufbewahrungsbehältern aufgenommen werden können, hängen von der Ausbildung der Aufnahmen und der Aufbewahrungsbehälter ab.

Die Verlagerungseinrichtung kann einen Elektromotor und/oder eine Feder aufweisen. In einer Ausführungsform erfolgt das Verfahren des ersten Aufbewahrungsbehälters aus der ersten Ausnahme heraus über einen Elektromotor. Der Elektromotor kann über Bedienbefehle von Bedienelementen am Aufbewahrungssystem oder einem entfernten Bedienelement, wie zum Beispiel an einem Fahrzeugarmaturenbrett, gesteuert werden. Zusätzlich kann auch das Verdrehen der zweiten Aufbewahrungsbehälter um den ersten Aufbewahrungsbehälter in der herausgefahrenen Position des ersten Aufbewahrungsbehälters über den gleichen oder einen zusätzlich Elektromotor oder eine Getriebesteuerung, die mit dem Elektromotor gekoppelt ist, durchgeführt werden.

Über eine Feder, die in der ersten Aufnahme aufgenommen und derart mit dem ersten Aufbewahrungsbehälter verbunden ist, dass über die Feder der erste Aufbewahrungsbehälter aus der ersten Aufnahme herausfahrbar ist, kann durch Auslösen einer Entriegelung das Herausfahren durchgeführt werden. Damit der erste Aufbewahrungsbehälter nicht vollständig aus der ersten Aufnahme herausbewegt wird, sind Begrenzungselemente angeordnet. In einfachen Ausführungen können die Begrenzungselemente durch einen Anschlag oder durch korrespondierende Anschläge gebildet werden. Diese verhindern ein Herausfahren aus einer maximalen Position des ersten Aufnahmebehälters aus der ersten Aufnahme. Der erste Aufbewahrungsbehälter und die erste Aufnahme können auch mindestens eine Führung aufweisen, sodass ein Verdrehen des ersten Aufbewahrungsbehälters verhindert wird. In weiteren Ausführungsformen ist an dem ersten Aufbewahrungsbehälter ein Griffelement angeordnet und der erste Aufbewahrungsbehälter kann manuell aus der ersten Aufnahme herausbewegt werden. Zusätzlich sind dann Arretierungsmittel vorgesehen, die eine Arretierung des ersten Aufbewahrungsbehälters in der herausgefahrenen Position erlauben.

Die Verlagerungseinrichtung kann Verriegelungsmittel aufweisen, welche den ersten Aufbewahrungsbehälter in der Verstauposition halten. Die Verriegelungsmittel können beispielsweise durch eine Feder und ein entsprechendes Halteelement gebildet werden. Bei der Feder kann es sich um eine Feder handeln, die am Boden der ersten Aufnahme angeordnet ist und sich gegen den Boden des ersten Aufbewahrungsbehälters abstützt. Die Feder ist vorzugsweise als Druckfeder - alternativ als Kegelfeder - ausgebildet und drückt dadurch den ersten Aufbewahrungsbehälter stets aus der ersten Aufnahme heraus, solange der erste Aufbewahrungsbehälter nicht über Verriegelungselemente oder andere Rastelemente in der Verstauposition am Boden der ersten Aufnahme gehalten wird. Verriegelungsmittel können auch durch federgelagerte Druckelemente gebildet werden, die beispielsweise in Seitenwänden der ersten Aufnahme aufgenommen sind und in entsprechende Ausnehmungen in der äußeren Gehäusewand des ersten Aufbewahrungsbehälters eindringen.

Die Verriegelungsmittel können mindestens eine Feder, einen Haken und/oder eine Herzkurve und ein in der Herzkurve geführtes Führungselement aufweisen. In weiteren Ausführungsformen ist der erste Aufbewahrungsbehälter über einen sogenannten "Push-Push"-Mechanismus in der ersten Aufnahme gehalten. Befindet sich der erste Aufbewahrungsbehälter in der ersten Aufnahme und wird ein Druck von oben auf den ersten Aufbewahrungsbehälter ausgeübt, so erfolgt eine geringe Verlagerung des ersten Aufbewahrungsbehälters nach unten in die erste Aufnahme hinein. Anschließend wird der erste Aufbewahrungsbehälter freigegeben und wird über eine Feder nach oben aus der ersten Aufnahme herausgedrückt. Der erste Aufbewahrungsbehälter verfährt dann soweit nach oben, bis dieser an einem Anschlag oder einem anderen Begrenzungselement anstößt. Soll der erste Aufbewahrungsbehälter wieder in die erste Aufnahme verbracht werden, so ist zuerst sicher zu stellen, dass die zweiten Aufbewahrungsbehälter in ihre Ausgangsposition zurück verschwenkt wurden, sodass diese sich deckungsgleich über den zweiten Aufnahmen befinden. Dann wird auf den ersten Aufbewahrungsbehälter ein Druck ausgeübt, bis dieser vollständig in der ersten Aufnahme aufgenommen worden ist und über die Herzkurvensteuerung und einen Haken verrastet. Anstelle einer Herzkurvensteuerung kann auch ein anderes Hakensystem zur Verriegelung des ersten Aufbewahrungsbehälters am Boden der ersten Aufnahme vorgesehen sein. Alternativ kann auch eine Verriegelung an den Seitenwänden der ersten Aufnahme erfolgen.

Die erste Aufnahme kann eine Führung aufweisen, die mit einem Bewegungsdämpfer des ersten Aufbewahrungsbehälters gekoppelt ist. Beispielsweise ist eine Zahnstange an der ersten Aufnahme vorgesehen, die mit einem als Rotationsdämpfer ausgebildeter Bewegungsdämpfer in Eingriff steht. Der Rotationsdämpfer bzw. Bewegungsdämpfer ist mit dem ersten Aufbewahrungsbehälter verbunden. Beim Herausfahren des ersten Aufbewahrungsbehälters aus der ersten Aufnahme, beispielsweise über eine Druckfeder, erfolgt über den Bewegungsdämpfer ein im Wesentlichen gleichmäßiges Herausfahren des ersten Aufbewahrungsbehälters. Analog dazu erfolgt beim Hineinfahren bzw. Hineindrücken des ersten Aufbewahrungsbehälters in die erste Aufnahme gegen die Kraft der Feder ein im Wesentlichen gleichmäßiges Verfahren aufgrund des Bewegungsdämpfers. Der Bewegungsdämpfer kann auch dazu dienen, einen nichtlinearen Verlauf einer Feder auszugleichen.

Der erste Aufbewahrungsbehälter kann einen drehbar gelagerten Ring aufweisen, der mit den zweiten Aufbewahrungsbehältern verbunden ist. Der drehbar gelagerte Ring ist in einer Führung, beispielsweise einer Führungsnut, in dem ersten Aufbewahrungsbehälter angeordnet. Der erste Aufbewahrungsbehälter wird dadurch im Gebrauch des Aufbewahrungssystems nicht verdreht. Hierdurch wird ein Verkippen des ersten Aufbewahrungsbehälters auch erschwert, weil dieser dann über weitere Führungen oder Führungselemente in der ersten Aufnahme und an dessen Außenwand sicher gehalten werden kann. Das Verdrehen der zweiten Aufbewahrungsbehälter erfolgt lediglich über den Ring.

Das Aufbewahrungssystem kann weiter mindestens ein erstes Verriegelungselement aufweisen, über welches der erste Aufbewahrungsbehälter in der herausgefahrenen Position arretierbar ist. Die Verriegelung in der herausgefahrenen Position kann beispielsweise über eine Herzkurvensteuerung erfolgen, wobei entweder an der Gehäusewand des ersten Aufbewahrungsbehälters oder der Wand der ersten Aufnahme eine Herzkurve ausgebildet ist, in der ein Führungselement geführt ist, welches entsprechend an dem ersten Aufbewahrungsbehälter oder der Gehäusewand der ersten Aufnahme angeordnet ist.

Der erste Aufbewahrungsbehälter kann mindestens ein zweites Verriegelungselement aufweisen, über welches die zweiten Aufbewahrungsbehälter in der verdrehten Position arretierbar sind. Die Arretierung kann beispielsweise über den drehbar gelagerten Ring erfolgen, der lediglich um ein bestimmtes Maß bzw. einen bestimmten Winkelbereich verdreht werden kann. Beispielsweise erfolgt ein Verdrehen lediglich um 90 Grad. Dabei können federgelagerte Kugeln oder andere Druckelemente vorgesehen sein, welche in entsprechende Rastausnehmungen in dem Ring eingreifen.

Der erste Aufbewahrungsbehälter und/oder die zweiten Aufbewahrungsbehälter können verdrehbare, verschwenkbare, ausziehbare und/oder austauschbare Aufbewahrungselemente und/oder Aufbewahrungseinsätze aufweisen. Darüber hinaus können auch Aufbewahrungseinsätze in die zweiten Aufnahmen eingesetzt werden, wenn sich die zweiten Aufbewahrungsbehälter in der Gebrauchsposition bzw. in der herausgefahrenen Position des ersten Aufbewahrungsbehälters und der verschwenkten Position der zweiten Aufbewahrungsbehälter befinden. Die Aufbewahrungsbehälter können ferner schubladenartige Elemente oder kleine Türen aufweisen. Darüber hinaus können die Einsätze oder die zweiten Aufnahmen eine Thermofunktionen aufweisen und dadurch als Thermocupholder dienen. Zusätzlich können Stecker bzw. Anschlüsse in den Aufnahmeelementen bzw. Aufbewahrungseinsätzen und den Aufbewahrungsbehältern sowie in den Aufnahmen selbst vorgesehen sein.

Die erste Aufnahme und die zweiten Aufnahmen können eine obere Aufnahmeöffnung aufweisen und die Aufnahmeöffnungen in einer Ebene liegen, wobei die Aufnahmeöffnungen der zweiten Aufnahmen über jeweils eine sich ausgehend von den Aufnahmeöffnungen nach unten erstreckende Öffnung mit der Aufnahmeöffnung der ersten Aufnahme verbunden sind. Die Öffnungen zwischen der ersten Aufnahme und den zweiten Aufnahmen bieten Platz für Verbindungselemente zwischen den zweiten Aufbewahrungsbehältern und dem ersten Aufbewahrungsbehälter. Befinden sich die Aufbewahrungsbehälter in der Verstauposition und sind in ihren jeweiligen Aufnahmen aufgenommen, so sind nur die Aufbewahrungsbehälters sichtbar, die zusätzlich noch im Wesentlichen in einer Ebene mit einer die Aufnahmen umgebenden Blende liegen.

Zusätzlich können die erste Aufnahme, die zweite Aufnahme, der erste Aufbewahrungsbehälter und/oder die zweiten Aufbewahrungsbehälter Beleuchtungseinrichtungen aufweisen, die eine Illuminierung der Aufnahmeräume oder der Außenwände bzw. Innenwände ermöglichen. Beispielsweise kann bei Thermocupholdern, die in den Aufbewahrungseinsätzen oder den Aufnahmen oder den Aufbewahrungsbehältern angeordnet sind, eine Beleuchtung in Abhängigkeit der eingestellten Temperatur erfolgen.

In noch weiteren Ausführungsformen sind der erste Aufbewahrungsbehälter und/oder mindestens einer der zweiten Aufbewahrungsbehälter als Abfalleimer ausgebildet und weisen einen verschließbaren Deckel und
- einen Klemmring zum Befestigen und Halten von Abfalltüten, oder
- einen entnehmbaren Kunststoffbehälter aufweisen.

Der Kunststoffbehälter kann direkt zur Aufnahme von Abfällen ausgebildet sein, so dass auf ein Einsetzen von Abfalltüten verzichtet werden kann. Hierzu ist der Kunststoffbehälter bspw. spülmaschinenfest ausgebildet und kann eine "easy to clean" sowie eine antibakterielle Beschichtung aufweisen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Darstellung eines Aufbewahrungssystems in einer Verstaustellung in perspektivischer Ansicht;
- Fig. 2: eine schematische Darstellung eines Aufbewahrungssystem in einer Gebrauchsstellung in perspektivischer Ansicht;
- Fig. 3: eine schematische Darstellung eines Aufbewahrungssystems in einer Verstaustellung im Schnitt;
- Fig. 4: eine schematische Darstellung eines Aufbewahrungssystems in einer herausgefahrenen Stellung im Schnitt; und
- Fig. 5: eine schematische Explosionszeichnung eines Aufbewahrungssystems.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben, welche nicht wesentlich zum Verständnis der hierin offenbarten technischen Lehre sind.

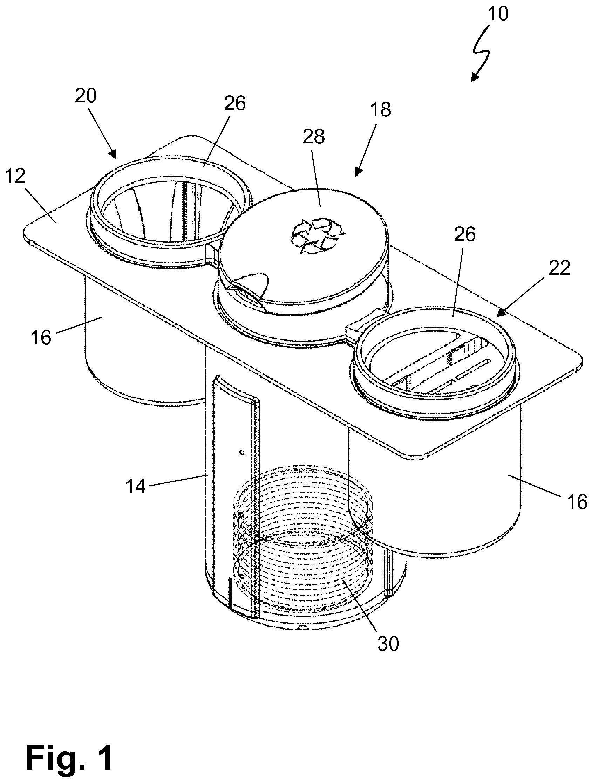

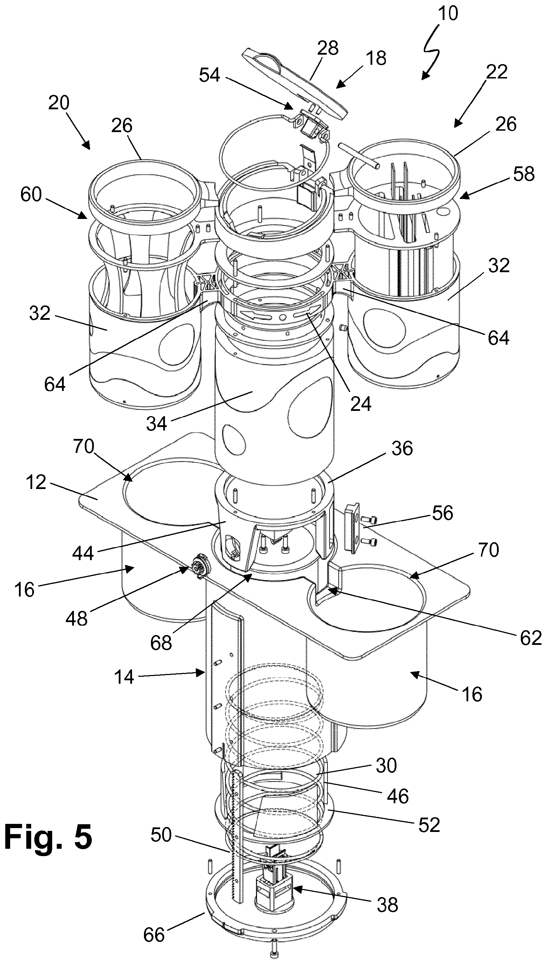

Fig. 1 zeigt eine schematische Darstellung eines Aufbewahrungssystems 10 in einer Verstaustellung. Das Aufbewahrungssystem 10 weist einen ersten Aufbewahrungsbehälter 18 und zwei zweite Aufbewahrungsbehälter 20 und 22 auf, wobei die zweiten Aufbewahrungsbehälter 20 und 22 verschiedene Aufbewahrungseinsätze aufweisen. Der Aufbewahrungsbehälter 18 ist in einer ersten Aufnahme 14 aufgenommen. Die zweiten Aufbewahrungsbehälter 20 und 22 sind in zweiten Aufnahmen 16 aufgenommen. Die Aufnahmen 16 sind neben der Aufnahme 14 angeordnet. Die Aufnahmen 14 und 16 weisen Aufnahmeöffnungen 68 und 70 auf (siehe Fig. 5), die im Wesentlichen in einer Ebene liegen und von einer Blende 12 umgeben sind. In der in Fig. 1 gezeigten Verstaustellung des Aufbewahrungssystems 10 ragen Blenden 26 der zweiten Aufbewahrungsbehälter 20 und 22 aus den Ausnahmen 16 hervor und überstehen die Blende 12.

Der erste Aufbewahrungsbehälter 18 weist einen Deckel 28 auf und ist als Abfallbehälter ausgebildet. Der Deckel 28 kann geöffnet werden, um in den ersten Aufbewahrungsbehälter 18 Abfälle einzubringen und anschließend wieder zu verschließen.

In der ersten Aufnahme 14 ist eine Feder 30 aufgenommen. Die Feder 30 ist als Druckfeder ausgebildet und stets bestrebt zu expandieren. Die Feder 30 stützt sich sowohl am Aufnahmeboden 66 der Aufnahme 14 als auch an dem Boden 36 des ersten Aufbewahrungsbehälters 18 ab. In der Verstauposition ist die Feder 30 gespannt. Damit die Feder 30 keine Verlagerung des ersten Aufbewahrungsbehälters 18 nach oben aus der ersten Aufnahme 14 heraus bewirkt, ist der erste Aufbewahrungsbehälter 18 über eine Verriegelungseinheit 38 (in Fig. 1 nicht dargestellt) arretiert.

In der Verstaustellung des Aufbewahrungssystems 10 können in die zweiten Aufbewahrungsbehälter 20 und 22 verschiedene Gegenstände eingesetzt werden. So kann beispielsweise in den zweiten Aufbewahrungsbehälter 20 eine Getränkeflasche eingesetzt werden. In den zweiten Aufbewahrungsbehälter 22 können beispielsweise ein Smartphone und ein Stift oder eine Sonnenbrille sowie Münzen eingesetzt werden. Hierzu weist der zweite Aufbewahrungsbehälter 22 einen Einsatz 58 mit entsprechenden Aufnahmefächern auf.

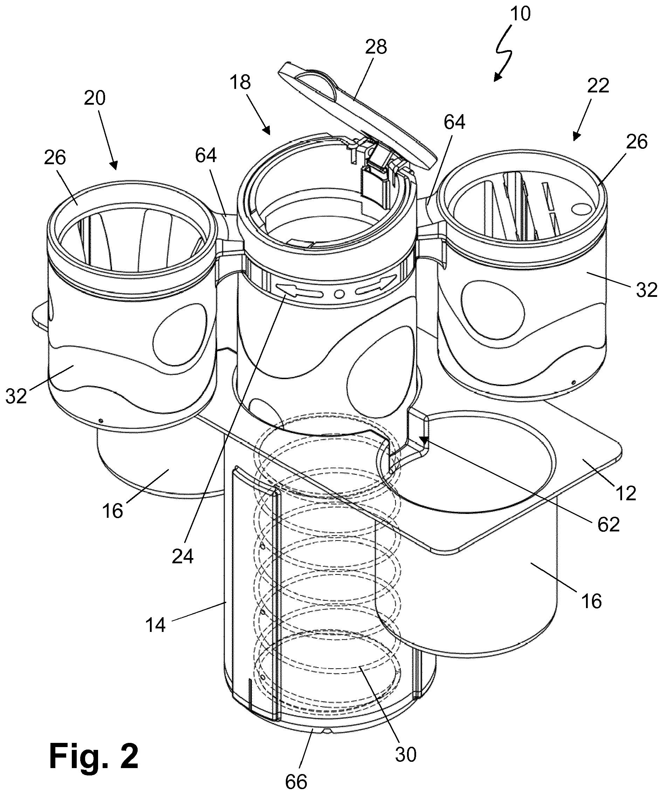

Fig. 2 zeigt eine schematische Darstellung des Aufbewahrungssystems 10 in einer Gebrauchsstellung in perspektivischer Ansicht. Das Aufbewahrungssystem 10 ist in Fig. 2 noch nicht vollständig in eine Gebrauchsposition überführt. Fig. 2 zeigt den Zustand, nachdem die Verriegelungseinheit 38 (in Fig. 2 nicht dargestellt) den ersten Aufbewahrungsbehälter 18 freigegeben hat und dieser über die Feder 30 herausgefahren wurde. Die Aufnahme 14 oder der Aufbewahrungsbehälter 18 können korrespondierende Anschläge aufweisen, sodass ein vollständiges Herausfahren des ersten Aufbewahrungsbehälters 18 aus der Aufnahme 14 heraus nicht möglich ist. Ein Herausnehmen des Aufbewahrungsbehälters 14 kann bspw. nur dann erfolgen, wenn der Aufbewahrungsbehälter 14 zusätzlich noch um ein bestimmtes Maß verdreht wird und/oder eine Sperre gelöst wird.

Der erste Aufbewahrungsbehälter 18 weist eine umlaufende Nut auf, in der ein Ring 24 aufgenommen ist. An dem Ring 24 sind Verbindungselemente 64 angeordnet, die mit Gehäusen 32 der zweiten Aufbewahrungsbehälter 20 und 22 verbunden sind. Die zweiten Aufbewahrungsbehälter 20 und 22 lassen sich daher, nachdem der erste Aufbewahrungsbehälter 18 aus der Aufnahme 14 herausbewegt worden ist, um die Längsachse des ersten Aufbewahrungsbehälters 18 verdrehen. Die zweiten Aufbewahrungsbehälter 20 und 22 weisen eine geringere Höhe als der erste Aufbewahrungsbehälter 18 auf. Dadurch wird sichergestellt, dass der erste Aufbewahrungsbehälter 18 sicher in der ersten Aufnahme 14 gehalten ist und es zu keinem Verkippen des ersten Aufbewahrungsbehälters 18 kommen kann. Trotzdem können die zweiten Aufbewahrungsbehälter 20 und 22 verdreht werden. Nach dem Verdrehen der zweiten Aufbewahrungsbehälter 20 und 22 liegen die Aufnahmen 16 frei. In die Aufnahmen 16 können dann Einsätze 58 und 60 eingesetzt werden, sowie diese bereits in den Aufbewahrungsbehältern 20 und 22 eingesetzt sind, oder Gegenstände ohne solche Einsätze 58 und 60 eingebracht werden. Beispielsweise kann in eine der Aufnahmen 16 eine Getränkeflasche eingesetzt werden. Die Aufnahmen 16 oder die zweiten Aufbewahrungsbehälter 20 und 22 bzw. die Einsätze können als Thermocupholder ausgebildet sein oder Elemente zum Temperieren von Getränken aufweisen. Beispielsweise können Einsätze eine Steckverbindung aufweisen, über welche eine Stromversorgung zum Temperieren von Getränken erreicht wird. Dies kann beispielsweise nur dann möglich sein, wenn einer der zweiten Aufbewahrungsbehälter 20 oder 22 in einer der Aufnahmen 16 aufgenommen ist und mit einer entsprechenden Kontaktstelle in der Aufnahme 16 in Verbindung steht. Ferner können auch wärmeleitende Kontakte vorgesehen sein. Eine Temperierung von Getränken kann aber auch in einer Gebrauchsstellung mit verschwenkten zweiten Aufbewahrungsbehältern 20 und 22 erfolgen. Darüber hinaus können die Aufbewahrungsbehälter 18, 20 und 22 sowie die entsprechenden Aufnahmen 16 durch Beleuchtungseinrichtungen, wie beispielsweise Leuchtdioden, beleuchtbar sein.

Zwischen der Aufnahme 14 und den Aufnahmen 16 bestehen Öffnungen 62 (in Fig. 2 nur für eine Aufnahme 16 dargestellt), die so ausgebildet sind, dass die Verbindungselemente 64 in der Verstaustellung des Aufbewahrungssystems 10 darin aufgenommen sind. Die Verbindungselemente 64 sind dann in der Verstauposition nicht sichtbar und liegen unterhalb der Oberfläche der Blende 12.

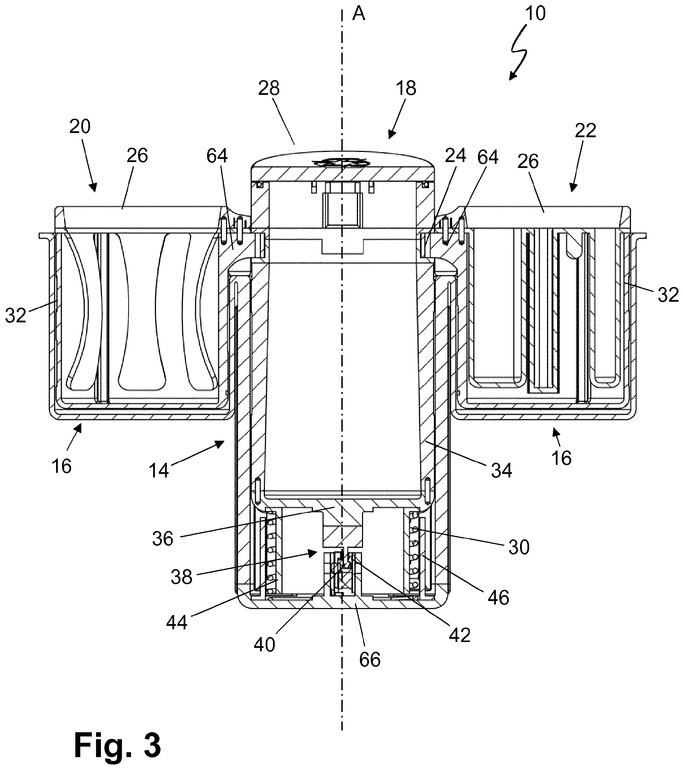

Fig. 3 zeigt eine schematische Darstellung eines Aufbewahrungssystems 10 in einer Verstaustellung im Schnitt. In Fig. 3 ist die Verriegelungseinheit 38 dargestellt. Die Verriegelungseinheit 38 weist einen Haken 40 und einen Haken 42 auf, die in der Verstaustellung ineinander greifen und dadurch eine Arretierung des ersten Aufbewahrungsbehälters 18 in der ersten Aufnahme 14 bereitstellen. Der Haken 40 ist über den Boden 36 des ersten Aufbewahrungsbehälters 18 mit dem ersten Aufbewahrungsbehälter 18 verbunden. An dem Boden 36 sind Wandelemente 44 angeordnet, über welche die Feder 30 gehalten wird. Der Aufnahmeboden 66 weist weitere Wandelemente 46 auf. Zwischen den Wandelementen 46 und 44 ist die Feder 30 in Position gehalten und wird auch beim Heraus- und Hineinfahren des ersten Aufbewahrungsbehälters 18 zumindest teilweise geführt.

An dem Gehäuse 34 des ersten Aufbewahrungsbehälters 18 sowie an den Innenwänden der ersten Aufnahme 14 können korrespondierende Führungselemente angeordnet sein.

Um eine Entriegelung des ersten Aufbewahrungsbehälters 18 zu erreichen, muss dieser um einen geringen Weg nach unten gedrückt werden. Daher besteht ein Abstand zwischen den beiden Elementen, über welche die Haken 40 und 42 ineinander verbunden sind. Das bedeutet, dass der Haken 42 in der in Fig. 3 gezeigten Verstauposition noch um einen bestimmten Weg nach unten verfahren werden kann. Dabei kann der Boden 36 bzw. der gesamte Aufbewahrungsbehälter 18 um diesen bestimmten Weg weiter in die erste Aufnahme 14 gedrückt werden. Aus diesem Grund sind die Wandelemente 46 des Aufnahmebodens 46 nicht in Kontakt mit dem Boden 36 des ersten Aufbewahrungsbehälters 18. Die Wandelemente 44 des Bodens 36 weisen ebenfalls keinen direkten Kontakt mit dem Aufnahmeboden 36 auf.

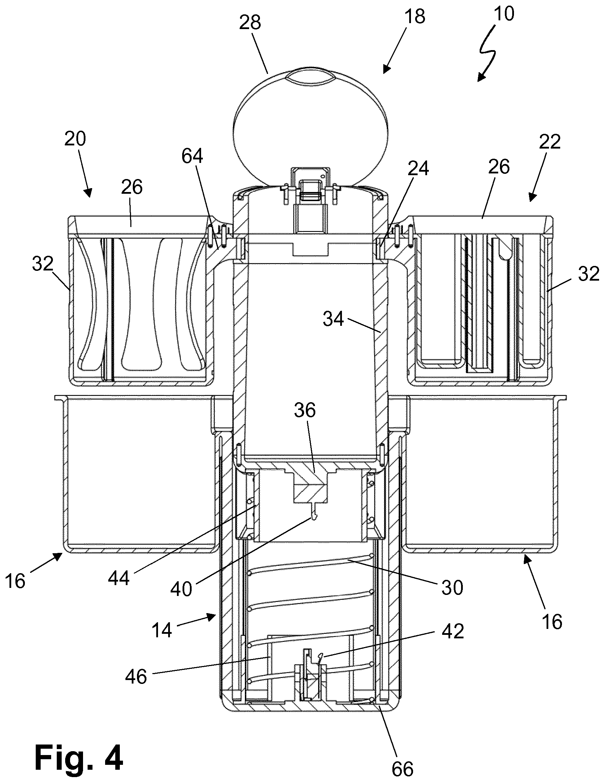

Fig. 4 zeigt eine schematische Darstellung eines Aufbewahrungssystems 10 in einer herausgefahrenen Stellung des ersten Aufbewahrungsbehälter 18 aus der ersten Aufnahme 14 und der zweiten Aufbewahrungsbehälter 20 und 22 aus den zweiten Aufnahmen 16.

Der Haken 42 der Verriegelungseinheit 38 ist nach rechts verschwenkt und hat den Haken 40 damit freigegeben. Die Verriegelungseinheit 38 weist zum Freigeben des Hakens 40 weitere Bestandteile auf. So ist in Fig. 4 dargestellt, dass ein Teil der Verriegelungseinheit 38 nach oben aus einer Hülse herausgefahren worden ist. Die Hülse hält den Haken 42 bei der in Fig. 3 gezeigten Position so, dass der Haken 40 gehalten wird. Insbesondere ist der Haken 42 so ausgebildet oder über eine Feder gespannt, dass dieser stets bestrebt ist die in Fig. 4 gezeigt Position einzunehmen. Befindet sich der Haken 42 jedoch innerhalb der Hülse, kann dieser nicht verschwenkt werden. Die Verriegelungseinheit 38 weist hierzu ferner ein Federelement und andere Bestandteile auf. Weiter kann die Verriegelungseinheit 38 einen "Push-Push"-Mechanismus aufweisen, der ein Teil der Verriegelungseinheit 38 ist und das Verfahren des Haltelementes mit dem Haken 42 gegen die Kraft einer Feder steuert.

Fig. 5 zeigt eine schematische Explosionszeichnung eines Aufbewahrungssystems 10. In Fig. 5 sind weitere Bestandteile für das Aufbewahrungssystem 10 dargestellt, die als Dichtungselemente, Verbindungselemente und anderweitige Hilfsmittel dienen. Beispielsweise sind Stifte, Schrauben und Ringe dargestellt.

Fig. 5 zeigt die Ausbildung des Deckels 28, der über einen Mechanismus 54 geöffnet und geschlossen werden kann, wobei der Mechanismus 54 auch ein Federelement, beispielsweise eine Blattfeder, aufweist. In Fig. 5 sind die Einsätze 58 und 60 dargestellt. Der Einsatz 58 weist Aufnahmeschlitze auf, in die beispielsweise Stifte, Münzen und ein Smartphone eingesetzt werden können. Der Einsatz 60 weist nach innen in den Aufnahmeraum des zweiten Aufbewahrungsbehälters 20 ragende flexible Elemente auf, die zum Halten einer Getränkeflasche oder eines Getränkebehälters ausgebildet sind.

An dem Boden 36 des ersten Aufbewahrungsbehälters 18 sind die Wandelemente 44 angeordnet. Die Wandelemente 44 erstrecken sich umfangsseitig um den äußeren Boden 36. Beispielsweise weist der Boden 36 drei Wandelemente 44 auf. In einem der Wandelemente 44 ist ein Rotationsdämpfer 48 aufgenommen. Beim Verfahren des ersten Antriebsbehälters 18 entlang der Achse A (siehe Fig. 3) dämpft er die Bewegung. Der Rotationsdämpfer 48 steht dabei mit einer Zahnstange 50 in Eingriff, die in einer Ausbuchtung an dem Gehäuse der ersten Aufnahme 14 vorgesehen ist. Ein Nutenstein 46 dient als Führungselement und ist in einer entsprechenden Führung in dem Gehäuse der ersten Aufnahme 14 aufgenommen. Hierdurch wird verhindert, dass der erste Aufbewahrungsbehälter 18 beim Verfahren aus der Verstaustellung in die Gebrauchsstellung um seine Achse A verdreht werden kann.

Die Wandelemente 46 sind umfangseitig um einen Ring 52 herum angeordnet, der auf dem Aufnahmeboden 66 aufliegt. Der Ring 52 weist eine solche Höhe auf, dass eine Bewegung des ersten Aufbewahrungsbehälters 18 nach unten zum Freigeben des ersten Aufbewahrungsbehälters 18 über die Verriegelungseinheit 38 möglich ist. Der Ring 52 kann daher als Distanzelement dienen.

Das in den Fig. 1 bis 5 gezeigte Aufbewahrungssystem 10 bietet in der Verstauposition Platz für verschiedene Gegenstände. Das Aufbewahrungssystem 10 bietet in der Verstauposition Platz zur Aufnahme von verschiedenen Gegenständen über den ersten Aufbewahrungsbehälter 18, den zweiten Aufbewahrungsbehälter 20 und den zweiten Aufbewahrungsbehälter 22. Nach dem Verfahren des ersten Aufbewahrungsbehälters 18 entlang der Achse A können die zweiten Aufbewahrungsbehälter 20 und 22 um die Achse A verdreht werden, wodurch die Aufnahmen 16 freiliegen. In die Aufnahmen 16 können dann weitere Einsätze, wie beispielsweise die Einsätze 58 und 60, eingesetzt werden, wodurch Aufbewahrungsmöglichkeiten für weitere Gegenstände geschaffen werden. Alternativ können auch in die Aufnahmen 16 Gegenstände eingesetzt werden. Das Aufbewahrungssystem 10 eignet sich insbesondre dadurch, dass es stabil ausgebildet ist und es zu keinem Verkippen oder zu einer Beschädigung der Bestandteile des Aufbewahrungssystems 10 während dem Verdrehen der zweiten Aufbewahrungsbehälter 20 und 22 sowie beim Einsetzen von Gegenständen in die Aufbewahrungsbehälter 20 und 22 kommt. In weiteren nicht dargestellten Ausführungsformen können die zweiten Aufbewahrungsbehälter 20 und 22 mit noch weiteren zweiten Aufbewahrungsbehältern verbunden sein, die ebenfalls in entsprechenden zweiten Aufnahmen aufgenommen sind. Wird der erste Aufbewahrungsbehälter 18 aus seiner ersten Aufnahme 14 herausbewegt, können die zweiten Aufbewahrungsbehälter 20 und 22 und die noch weiteren zweiten Aufbewahrungsbehälter um die Achse A verschwenkt werden, wodurch weitere Aufnahmemöglichkeiten geschaffen werden, da die Aufnahmen 16 und die Aufnahmen für die noch weiteren zweiten Aufbewahrungsbehälter frei liegen.

Das Aufbewahrungssystem 10 kann beispielsweise in einer Mittelkonsole eines Kraftfahrzeugs angeordnet sein. Die Blende 12 ist in die Mittelkonsole integriert oder Bestandteil der Oberfläche einer Mittelkonsole. Die Bestandteile wie die Aufnahmen 16, 14 und die Blende 12 sowie die Aufbewahrungsbehälter 18, 20 und 22 können im Wesentlichen aus Kunststoff bestehen und sind daher in einem Spritzgussverfahren in hoher Stückzahl einfach herzustellen. Der Rotationsdämpfer 48 kann vorzugsweise aus Silikon bestehen und die Feder 30 eine Linearfeder, insbesondere eine Druckfeder sein.

### Bezugszeichenliste

- 10: Aufbewahrungssystem
- 12: Blende
- 14: erste Aufnahme
- 16: zweite Aufnahme
- 18: erster Aufbewahrungsbehälter
- 20: zweiter Aufbewahrungsbehälter
- 22: zweiter Aufbewahrungsbehälter
- 24: Ring
- 26: Blende
- 28: Deckel
- 30: Feder
- 32: Gehäuse
- 34: Gehäuse
- 36: Boden
- 38: Verriegelungseinheit
- 40: Haken
- 42: Haken
- 44: Wandelement
- 46: Wandelement
- 48: Rotationsdämpfer
- 50: Zahnstange
- 52: Ring
- 54: Mechanismus
- 56: Nutenstein
- 58: Einsatz
- 60: Einsatz
- 62: Öffnung
- 64: Verbindungselement
- 66: Aufnahmeboden
- 68: Aufnahmeöffnung
- 70: Aufnahmeöffnung
- A: Achse

## Patentansprüche

1. Aufbewahrungssystem, mindestens aufweisend eine erste Aufnahme (14), in der ein erster Aufbewahrungsbehälter (18) aufgenommen ist, wobei der erste Aufbewahrungsbehälter (18) über eine Verlagerungseinrichtung aus der ersten Aufnahme (14) herausfahrbar ist, **dadurch gekennzeichnet, dass** zwei zweite Aufnahmen (16) vorgesehen sind, in welchen jeweils zweite Aufbewahrungsbehälter (20, 22) aufgenommen sind, wobei die zweiten Aufbewahrungsbehälter (20, 22) mit dem ersten Aufbewahrungsbehälter (18) verbunden sind und die zweiten Aufbewahrungsbehälter (20, 22) in der herausgefahrenen Position des ersten Aufbewahrungsbehälters (18) um dessen Längsachse drehbar sind.

2. Aufbewahrungssystem nach Anspruch 1, wobei die Verlagerungseinrichtung einen Elektromotor und/oder eine Feder (30) aufweist.

3. Aufbewahrungssystem nach Anspruch 1 oder 2, wobei die Verlagerungseinrichtung Verriegelungsmittel aufweist, welche den ersten Aufbewahrungsbehälter (18) in der ersten Aufnahme (14) halten.

4. Aufbewahrungssystem nach Anspruch 3, wobei die Verriegelungsmittel mindestens eine Feder, einen Haken (40; 44) und/oder eine Herzkurve und ein in der Herzkurve geführtes Führungselement aufweisen.

5. Aufbewahrungssystem nach einem der Ansprüche 1 bis 4, wobei die erste Aufnahme (14) eine Führung aufweist, die mit einem Bewegungsdämpfer des ersten Aufbewahrungsbehälters (18) gekoppelt ist.

6. Aufbewahrungssystem nach einem der Ansprüche 1 bis 5, wobei der erste Aufbewahrungsbehälter (18) einen drehbar gelagerten Ring (24) aufweist, der mit den zweiten Aufbewahrungsbehältern (20, 22) verbunden ist.

7. Aufbewahrungssystem nach einem der Ansprüche 1 bis 6, aufweisend mindestens ein erstes Verriegelungselement, über welches der erste Aufbewahrungsbehälter (18) in der herausgefahrenen Position arretierbar ist.

8. Aufbewahrungssystem nach einem der Ansprüche 1 bis 7, wobei der erste Aufbewahrungsbehälter (18) mindestens ein zweites Verriegelungselement aufweist, über welches die zweiten Aufbewahrungsbehälter (20, 22) in der verdrehten Position arretierbar sind.

9. Aufbewahrungssystem nach einem der Ansprüche 1 bis 8, wobei der erste Aufbewahrungsbehälter (18) und/oder die zweiten Aufbewahrungsbehälter (20, 22) verdrehbare, verschwenkbare, ausziehbare und/oder austauschbare Aufbewahrungselemente und/oder Aufbewahrungseinsätze aufweisen.

10. Aufbewahrungssystem nach einem der Ansprüche 1 bis 9, wobei die erste Aufnahme (14) und die zweiten Aufnahmen (16) eine obere Aufnahmeöffnung (68; 70) aufweisen und die Aufnahmeöffnungen (68; 70) in einer Ebene liegen, wobei die Aufnahmeöffnungen (70) der zweiten Aufnahmen (16) über jeweils eine sich ausgehend von den Aufnahmeöffnungen (68; 70) nach unten erstreckende Öffnung (62) mit der Aufnahmeöffnung (68) der ersten Aufnahme (14) verbunden sind.

11. Aufbewahrungssystem nach einem der Ansprüche 1 bis 10, wobei der erste Aufbewahrungsbehälter (18) und/oder mindestens einer der zweiten Aufbewahrungsbehälter (20, 22) als Abfalleimer ausgebildet sind und einen verschließbaren Deckel (28) und
- einen Klemmring zum Befestigen und Halten von Abfalltüten, oder
- einen entnehmbaren Kunststoffbehälter aufweisen.

## Claims

1. Storage system at least comprising a first receptacle (14) in which a first storage container (18) is received, wherein the first storage container (18) is movable out of the first receptacle (14) by way of a displacing device, **characterised in that** two second receptacles (16) are provided, in which second storage containers (20, 22) are respectively received, wherein the second storage containers (20, 22) are connected with the first storage container (18) and the second storage containers (20, 22) in the moved-out position of the first storage container (18) are rotatable about the longitudinal axis thereof.

2. Storage system according to claim 1, wherein the displacing device comprises an electric motor and/or a spring (30).

3. Storage system according to claim 1 or 2, wherein the storage device comprises locking means which hold the first storage container (18) in the first receptacle (14).

4. Storage system according to claim 3, wherein the locking means comprise at least one spring, hook (40; 44) and/or heart cam and a guide element guided in the heart cam.

5. Storage system according to any one of claims 1 to 4, wherein the first receptacle (14) comprises a guide coupled with a movement damper of the first storage container (18).

6. Storage system according to any one of claims 1 to 5, wherein the first storage container (18) comprises a rotatably mounted ring (24) connected with the second storage containers (20, 22).

7. Storage system according to any one of claims 1 to 6, comprising at least one first locking element by way of which the first storage container (18) is lockable in the moved-out position.

8. Storage system according to any one of claims 1 to 7, wherein the first storage container (18) comprises at least one second locking element by way of which the second storage containers (20, 22) are lockable in the rotated position.

9. Storage system according to any one of claims 1 to 8, wherein the first storage container (18) and/or the second storage container (20, 22) comprise rotatable, pivotable, withdrawable and/or exchangeable storage elements and/or storage inserts.

10. Storage system according to any one of claims 1 to 9, wherein the first receptacle (14) and the second receptacles (16) have an upper receiving opening (68; 70) and the receiving openings (68; 70) lie in a plane, wherein the receiving openings (70) of the second receptacles (16) are each connected with the receiving opening (68) of the first receptacle (14) by way of a respective opening (62) extending downwardly starting from the receiving openings (68; 70).

11. Storage system according to any one of claims 1 to 10, wherein the first storage container (18) and/or at least one of the second storage containers (20, 22) is or are each constructed as a waste bin and a closable cover (28) and has or have
- a clamping ring for fastening and holding waste bags or
- a removable plastics material container.

## Revendications

1. Système de conservation, présentant au moins un premier logement (14), dans lequel un premier récipient de conservation (18) est reçu, dans lequel le premier récipient de conservation (18) peut être sorti du premier logement (14) par le biais d'un dispositif de déplacement, **caractérisé en ce que** deux deuxièmes logements (16) sont prévus, dans lesquels respectivement des deuxièmes récipients de conservation (20, 22) sont reçus, dans lequel les deuxièmes récipients de conservation (20, 22) sont reliés au premier récipient de conservation (18) et les deuxièmes récipients de conservation (20, 22) sont rotatifs dans la position sortie du premier récipient de conservation (18) autour de son axe longitudinal.

2. Système de conservation selon la revendication 1, dans lequel le dispositif de déplacement présente un moteur électrique et/ou un ressort (30).

3. Système de conservation selon la revendication 1 ou 2, dans lequel le dispositif de déplacement présente des moyens de verrouillage, lesquels retiennent le premier récipient de conservation (18) dans le premier logement (14).

4. Système de conservation selon la revendication 3, dans lequel les moyens de verrouillage présentent au moins un ressort, un crochet (40 ; 44) et/ou une cardioïde et un élément de guidage guidé dans la cardioïde.

5. Système de conservation selon l'une quelconque des revendications 1 à 4, dans lequel le premier logement (14) présente un guidage, qui est couplé à un amortisseur de déplacement du premier récipient de conservation (18).

6. Système de conservation selon l'une quelconque des revendications 1 à 5, dans lequel le premier récipient de conservation (18) présente une bague logée rotative (24), qui est reliée aux deuxièmes récipients de conservation (20, 22).

7. Système de conservation selon l'une quelconque des revendications 1 à 6, présentant au moins un premier élément de verrouillage, par le biais duquel le premier récipient de conservation (18) peut être bloqué dans la position sortie.

8. Système de conservation selon l'une quelconque des revendications 1 à 7, dans lequel le premier récipient de conservation (18) présente au moins un deuxième élément de verrouillage, par le biais duquel les deuxièmes récipients de conservation (20, 22) peuvent être bloqués dans la position tournée.

9. Système de conservation selon l'une quelconque des revendications 1 à 8, dans lequel le premier récipient de conservation (18) et/ou les deuxièmes récipients de conservation (20, 22) présentent des éléments de conservation et/ou des inserts de conservation tournants, pivotants, extractibles et/ou échangeables.

10. Système de conservation selon l'une quelconque des revendications 1 à 9, dans lequel le premier logement (14) et les deuxièmes logements (16) présentent une ouverture de logement supérieure (68 ; 70) et les ouvertures de logement (68 ; 70) se trouvent dans un plan, dans lequel les ouvertures de logement (70) des deuxièmes logements (16) sont reliées à l'ouverture de logement (68) du premier logement (14) par le biais de respectivement une ouverture (62) s'étendant vers le bas à partir des ouvertures de logement (68 ; 70).

11. Système de conservation selon l'une quelconque des revendications 1 à 10, dans lequel le premier récipient de conservation (18) et/ou au moins un des deuxièmes récipients de conservation (20, 22) est réalisé en tant que poubelle et présentent un couvercle (28) pouvant être fermé et
- une bague de serrage pour la fixation et le maintien de sachets poubelle, ou
- un récipient en plastique amovible.
